# EUROPÄISCHE PATENTSCHRIFT

(11) **EP 2 646 714 B1**
(45) Veröffentlichungstag und Bekanntmachung des Hinweises auf die Patenterteilung: **03.08.2016**
(21) Anmeldenummer: 11776101.5
(22) Anmeldetag: 21.10.2011
(51) Int. Cl.: F16H 57/031, F16H 57/021, F16H 57/03, F16H 57/04

(54) **GETRIEBEDECKEL UND GETRIEBE**
TRANSMISSION COVER AND TRANSMISSION
CHAPEAU DE TRANSMISSION ET TRANSMISSION

(30) Priorität: 02.12.2010 DE 102010053010
(43) Veröffentlichungstag der Anmeldung: 09.10.2013
(73) Patentinhaber: Sew-Eurodrive GmbH & Co. KG, 76646 Bruchsal (DE)
(72) Erfinder: GRIMM, Andreas, 66121 Saarbrücken (DE)
(86) Internationale Anmeldenummer: PCT/EP2011/005325
(87) Internationale Veröffentlichungsnummer: WO 2012/072166

(56) Entgegenhaltungen:
- WO-A1-02/052176
- DE-A1- 10 047 233
- JP-U- 52 013 272
- JP-U- 56 174 747
- US-A- 4 506 561
- US-A1- 2007 151 376

## Beschreibung

Die Erfindung betrifft einen Getriebedeckel und ein Getriebe.

Aus der JP 56174747 U ist ein Getriebedeckel bekannt, wobei ein einziger Aufbau vorgesehen ist.

Aus der DE 100 47 233 A1 ist ein Maschinengehäuse bekannt, bei welchem Umfangsrippen und quer verlaufende Rippen ausgebildet sind.

Aus der US 4 506 561 A ist ein Getriebegehäuse bekannt, bei welchem an einer Gehäuseglocke innenseitig Verstärkungsrippen ausgebildet sind.

Aus der WO 02/052176 A1 ist ein mehrstufiges Planetenübersetzungsgetriebe bekannt, bei welchem außenseitig an einem Kopf einer Getriebeeinheit zwei axial verlaufende und sich radial erstreckende Flächen ausgebildet sind. Ein Getriebedeckel nach dem Oberbegriff der Ansprüche 1 und 2 ist aus der WO 02/052176 A1 bekannt.

Der Erfindung liegt die Aufgabe zugrunde, die Gebrauchseigenschaften eines Getriebes zu erhöhen.

Erfindungsgemäß wird die Aufgabe bei dem Getriebedeckel durch die in Anspruch 1 oder 2 und bei dem Getriebe durch die in Anspruch 15 angegebenen Merkmale gelöst.

Wichtige Merkmale der Erfindung eines Getriebedeckels sind in Anspruch 1 und alternativ in Anspruch 2 angegeben. Insbesondere wird somit vorgeschlagen, dass der Getriebedeckel einen kegelstumpfförmigen Grundkörper aufweist, dass die Nabe am verjüngten Ende des kegelstumpfförmigen Grundkörpers angeordnet ist, dass auf einer Schrägfläche des Grundkörpers ein Aufbau mit einer von der Schrägfläche abgewinkelten Stirnfläche ausgebildet ist und dass in der Stirnfläche eine durchgehende Bohrung eingebracht ist, in welche ein Ölschauglas oder eine Verschlussschraube eingesetzt ist. Von Vorteil ist dabei, dass der Bauraum der Schrägfläche, in welchem eine Lagerung einer durch den Deckel geführten Welle aufnehmbar ist, für die Anordnung eines Ölschauglases nutzbar ist. Die Erfindung ermöglicht hierbei, das Ölschauglas in einer gegenüber der Schrägfläche angewinkelten Stirnfläche des Aufbaus anzuordnen. Hierdurch ist das Ölschauglas einfach zugänglich und für einen unkomplizierten Ölwechsel nutzbar. Die Schrägfläche kann durch eine Mantelfläche des kegelstumpfförmigen Grundkörpers ausgebildet sein. Ist durch den Getriebedeckel eine Welle geführt, so ist die Schrägfläche schräg zu der Achse der Welle orientiert und schließt mit dieser einen Winkel größer Null, insbesondere einen spitzen Winkel, ein.

Bei einer vorteilhaften Ausgestaltung kann vorgesehen sein, dass die Stirnfläche radial ausgerichtet ist. Dies erleichtert die Zugänglichkeit nochmals.

Bei einer vorteilhaften Ausgestaltung kann vorgesehen sein, dass die Nabe in einer Deckfläche des kegelstumpfförmigen Grundkörpers an dem Grundkörper angeordnet ist. Von Vorteil ist dabei, dass die volle axiale Länge des kegelstumpförmigen Grundkörpers zur Aufnahme eines in der Nabe angeordneten Lagers ausnutzbar ist. Unter einer Deckfläche wird hierbei die gedachte, ebene, kreisförmige Fläche eines Kegelstumpfes verstanden, welche am verjüngten Ende, also an dem axialen Ende in Bezug auf die Kegelachse mit kleinerem Durchmesser, ausgebildet ist.

Bei einer vorteilhaften Ausgestaltung kann vorgesehen sein, dass die Nabe konzentrisch zu dem Grundkörper an dem Grundkörper angeordnet ist. Somit ist eine mittige Anordnung der Nabe im Getriebedeckel erreichbar, welche für die Krafteinleitung der Lagerung günstig ist.

Bei einer vorteilhaften Ausgestaltung kann vorgesehen sein, dass der Aufbau in einem Radialschnitt eine dreieckige Grundform hat. Somit ist eine stabile Grundform bildbar.

Bei einer vorteilhaften Ausgestaltung kann vorgesehen sein, dass der Aufbau gaubenförmig ausgebildet ist. Somit ist eine einfach fertigbare Grundform bildbar. Unter einer Gaubenform wird allgemein eine auf einer Schrägfläche ausgebildete Grundform verstanden, welche aus drei jeweils paarweise benachbarten, gegenüber der Schrägfläche abgewinkelten Seitenflächen und einer dachartig die Seitenflächen auf deren der Schrägfläche abgewandten Enden abschließende und verbindende Dachfläche verstanden. Die Seitenflächen und die Dachfläche können hierbei eben, gekrümmt oder in sich abgewinkelt ausgebildet sein. Es lassen sich jedoch jeweils ebene Flächen besonders einfach fertigen.

Bei einer vorteilhaften Ausgestaltung kann vorgesehen sein, dass die Bohrung auf einer Radiallinie angeordnet ist, insbesondere also in radialer Richtung sich erstreckt. Somit ist eine Sichtbegutachtung der Welle und/oder des Wellenlagers und/oder der Nabe durch die Bohrung durchführbar.

Bei einer vorteilhaften Ausgestaltung kann vorgesehen sein, dass am äußeren Umfang des Grundkörpers ein umlaufender Deckelflansch ausgebildet ist. Somit ist der Getriebedeckel stabil an einem Getriebegehäuse befestigbar.

Bei einer vorteilhaften Ausgestaltung kann vorgesehen sein, dass die Nabe zwei axial beabstandete Aufnahmen für jeweils ein Lager aufweist. Somit ist eine Lagerung ausbildbar, welche Querkräfte gut aufnimmt.

Erfindungsgemäß ist vorgesehen, dass die Nabe in einen Innenraum des Grundkörpers abragt. Von Vorteil ist dabei, dass der Innenraum des Grundkörpers zur Aufnahme der Nabe verwendbar ist.

Erfindungsgemäß ist vorgesehen, dass zwischen der abragenden Nabe und dem Grundkörper radial verlaufende Verstärkungswände ausgebildet sind. Von Vorteil ist dabei, dass die Befestigung der Nabe am Grundkörper verstärkt, insbesondere verwindungssteif, ausbildbar ist.

Bei einer vorteilhaften Ausgestaltung kann vorgesehen sein, dass die Nabe und der Grundkörper einstückig ausgebildet und verbunden sind. Von Vorteil ist dabei, dass die Nabe und der Grundkörper dauerfest verbindbar sind. Die über das Wellenlager der Nabe eingebrachten Kräfte sind gut über den Getriebedeckel aufnehmbar.

Bei einer vorteilhaften Ausgestaltung kann vorgesehen sein, dass in Bezug auf die Achse der Nabe diametral gegenüber dem Aufbau ein zweiter Aufbau auf dem Grundkörper angeordnet ist, insbesondere wobei der zweite Aufbau identisch zu dem ersten Aufbau ausgebildet ist. Von Vorteil ist dabei, dass eine zweite Möglichkeit zur Sichtbegutachtung und/oder zum Ölwechsel ausbildbar ist, welche je nach Aufstellung und/oder Verwendung des Getriebedeckels verwendbar ist.

Bei einer vorteilhaften Ausgestaltung kann vorgesehen sein, dass das auf dem Grundkörper vier Aufbauten an jeweils um 90° in Umfangsrichtung versetzter Position angeordnet sind. Von Vorteil ist dabei, dass eine um die Achse der Nabe symmetrische Ausgestaltung erreichbar ist, welche eine Befestigung des Getriebedeckels in bis zu oder wenigstens vier Positionen erlaubt.

Bei einer vorteilhaften Ausgestaltung kann vorgesehen sein, dass jeder Aufbau eine gegen die Schrägfläche abgewinkelte, vorzugsweise radial orientierte, Stirnfläche aufweist, in welcher eine durchgehende Bohrung eingebracht ist. Von Vorteil ist dabei, dass die Aufbauten gleichwertig nutzbar sind. Eine ausschließliche Befestigung des Getriebedeckels in einer einzigen Orientierung ist somit nicht erforderlich.

Bei einer vorteilhaften Ausgestaltung kann vorgesehen sein, dass in jede Bohrung alternativ ein Ölschauglas, eine Verschlussschraube und/oder eine Messsonde einbringbar ist/sind. Von Vorteil ist dabei, dass der Aufbau oder die Aufbauten in unterschiedlicher Weise nutzbar sind.

Bei einer vorteilhaften Ausgestaltung kann vorgesehen sein, dass in Umfangsrichtung je ein Aufbau vorzugsweise mittig zwischen zwei Verstärkungswänden angeordnet ist. Von Vorteil ist dabei, dass eine günstige Krafteinleitung erreichbar ist.

Bei einer vorteilhaften Ausgestaltung kann vorgesehen sein, dass in Umfangsrichtung je eine Verstärkungswand vorzugsweise mittig zwischen zwei Aufbauten angeordnet ist. Von Vorteil ist dabei, dass eine günstige Platzausnutzung auf der Schrägfläche erreichbar ist.

Bei einer vorteilhaften Ausgestaltung kann vorgesehen sein, dass in einer Seitenfläche der Nabe wenigstens eine Öldurchlassöffnung ausgebildet ist, mit welcher Schmieröl zu in der Nabe angeordneten Lagern leitbar ist. Von Vorteil ist dabei, dass eine einfache Zuführung von Schmieröl durchführbar ist.

Bei einer vorteilhaften Ausgestaltung kann vorgesehen sein, dass die Bohrung des Aufbaus in radialer Verlängerung der Öldurchlassöffnung angeordnet ist. Von Vorteil ist dabei, dass eine direkte Sichtbegutachtung des Wellenlagers und/oder der Welle durch die Bohrung im Aufbau möglich ist. Ein Abnehmen des Getriebedeckels zur Sichtbergutachtung der Wellenlager ist somit in vielen Fällen nicht erforderlich.

Bei einer vorteilhaften Ausgestaltung kann vorgesehen sein, dass der Getriebedeckel um die Achse der Nabe rotationssysmmetrisch ausgebildet ist. Von Vorteil ist dabei, dass eine einfach fertigbare Formgebung erreichbar ist.

Bei einer vorteilhaften Ausgestaltung kann vorgesehen sein, dass eine Stirnfläche der Nabe fluchtend mit einer Deckfläche des kegelstumpfförmigen Grundkörpers angeordnet ist. Von Vorteil ist dabei, dass die axiale Baulänge des Getriebedeckels reduzierbar ist.

Bei einer vorteilhaften Ausgestaltung kann vorgesehen sein, dass an einer außenseitigen Stirnfläche der Nabe Bohrlöcher für die Befestigung eines die Nabe abdeckenden Lagerdeckels ausgebildet sind. Von Vorteil ist dabei, dass die Nabe und ein darin aufgenommenes Wellenlager auf einfache Weise vor unerwünschten Außeneinflüssen schützbar sind.

Bei einer vorteilhaften Ausgestaltung kann vorgesehen sein, dass der Getriebedeckel als einstückiges Gussteil ausgeführt ist. Von Vorteil ist dabei, dass die Fertigung des Getriebedeckels vereinfacht ist. Vorzugsweise ist eine Oberflächennachbearbeitung des Gussteils zumindest an der Schrägfläche nicht erforderlich.

Bei einer vorteilhaften Ausgestaltung kann vorgesehen sein, dass ein Innenraum des wenigstens einen Aufbaus von einem Innenraum des Grundkörpers her zugänglich ist. Von Vorteil ist dabei, dass der Aufbau im Gussverfahren materialsparend als Hohlkörper ausbildbar ist.

Bei einer vorteilhaften Ausgestaltung kann vorgesehen sein, dass eine Höhe des Grundkörpers durch eine axiale Länge der Nabe, insbesondere einen axialen Abstand der Lager voneinander, bestimmt ist. Von Vorteil ist dabei, dass die volle axiale Länge des Getriebedeckels für eine Lagerung an zwei mögichst weit voneinander beabstandeten Wellenabschnitten möglich ist. Hierdurch sind Kräfte besonders günstig aufnehmbar.

Zur Lösung der Aufgabe ist bei einem Getriebe, insbesondere Planetengetriebe, vorgesehen, dass eine Welle, insbesondere eine eintreibende Welle, durch einen erfindungsgemäßen Getriebedeckel geführt und in diesem gelagert ist. Von Vorteil ist dabei, dass kompakte und robuste und günstig Lagerung der Welle im Getriebedeckel

Weitere Vorteile ergeben sich aus den Unteransprüchen.

Die Erfindung wird nun anhand von Abbildungen näher erläutert:

Es zeigt:
- Fig. 1: eine dreidimensionale Schrägansicht eines erfindungsgemäßen Getriebedeckels,
- Fig. 2: eine weitere dreidimensionale Schrägansicht des Getriebedeckels aus Fig. 1,
- Fig. 3: eine dreidimensionale Schnittansicht des Getriebedeckels aus Fig. 1 und
- Fig. 4.: einen Axialschnitt des Getriebedeckels aus Fig. 1.

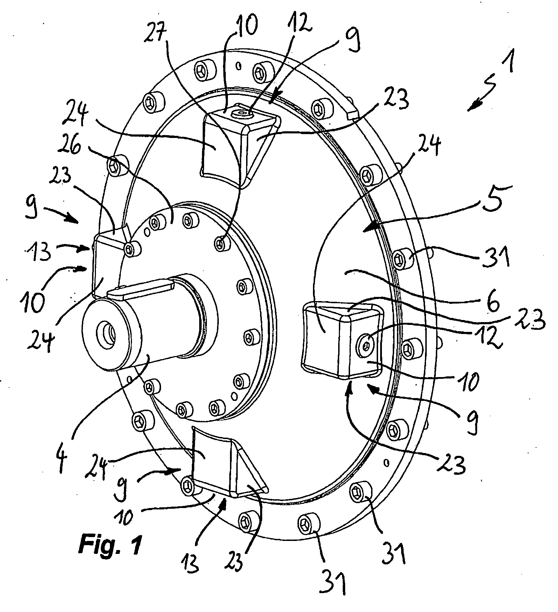

Die Figuren 1 bis 4 werden im Folgenden gemeinsam beschrieben.

Ein im Ganzen mit 1 bezeichneter Getriebedeckel hat eine Nabe 2, in welcher ein Wellenlager 3 angeordnet ist.

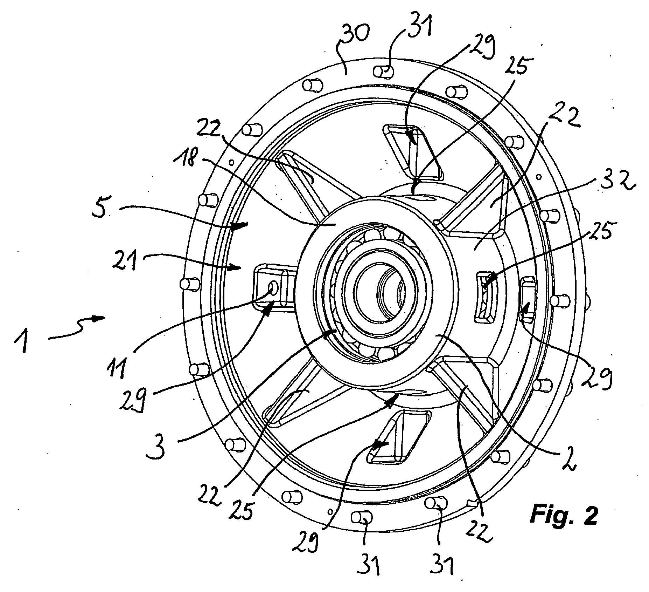

Das Wellenlager 3 nimmt eine Welle 4 auf und lagert diese drehbar. Die Welle 4 ist in Fig. 2 zur Vereinfachung der Darstellung weggelassen.

Der Getriebedeckel 1 hat einen Grundkörper 5. Der Grundkörper 5 weist eine Grundform eines Kegelstumpfes auf, welche aus einer Schrägfläche 6, welche den Kegelmantel beschreibt, und daran axial anschließend einem verjüngten Ende 7 und einem aufgeweiteten Ende 8 gebildet ist. Diese Grundform ist durch von der reinen Kegelstumpfform abweichende Abrundungen, Ausformungen und dergleichen ergänzt.

Auf der Schrägfläche 6 sind vier Aufbauten 9 rotationssymmetrisch um die Achse der Nabe 2 und um 90° gegeneinander versetzt angeordnet.

Die identisch zueinander ausgebildeten Aufbauten 9 weisen jeweils eine Stirnfläche 10 auf, welche gegenüber der Schrägfläche 6 abgewinkelt ausgebildet und angeordnet ist.

Die Stirnflächen 10 sind als ebene Flächen ausgebildet. Jede Stirnfläche 10 ist radial ausgerichtet, was durch eine entsprechende Anordnung des jeweiligen Aufbaus 9 erreicht ist.

In jede Stirnfläche ist mittig eine Bohrung 11 eingebracht. Diese Bohrung 11 ist durchgehend ausgeführt.

In die Bohrungen 11 sind jeweils Verschlussschrauben 12 oder ein in an sich bekannter Weise ausgeführten Ölschauglas 13 eingesetzt, um die Bohrung 9 zu verschließen. Die Verschlussschrauben 12 und die Ölschaugläser 13 können auch durch eine Messsonde ersetzt werden.

Das verjüngte Ende 7 des kegelstumpfförmigen Grundkörpers 5 beschreibt die mathematische Deckfläche 14 der Kegelstumpfform, welche axial ausgerichtet ist. Das aufgeweitete Ende 8 beschreibt die mathematische Grundfläche 15 der Kegelstumpfform, welche ebenfalls axial ausgerichtet ist.

Die Nabe 2 ist konzentrisch zu der Achse 16 der Welle 4 und zu der Deckfläche 14, der Schrägfläche 6 und der Grundfläche 15 angeordnet, so dass die Achse der Nabe 2 mit der Achse 16 der Welle 4 zusammenfällt.

Die Nabe 2 ist derart an der Deckfläche 14 angeordnet, dass eine Stirnfläche 17, nämlich die außenseitige Stirnfläche, der Nabe 2 fluchtend mit der Deckfläche 14 ausgebildet ist.

Die in axialer Richtung gegenüberliegende, innenseitige Stirnfläche 18 der Nabe 2 fluchtet dagegen mit der Grundfläche 15.

Somit ist die Höhe des kegelstumpfförmigen Grundkörpers 5 durch die axiale Länge der Nabe 2 bestimmt. Die Nabe 2 weist hierbei zwei Aufnahmen 19, 20 für jeweils ein Wellenlager 3 auf. Die axiale Länge der Nabe 2 ist durch den axialen Abstand der Aufnahmen 19, 20 und somit der Wellenlager 3 bestimmt.

Die Nabe 2 und der Grundkörper 5 sind einstückig miteinander verbunden und als Gussteil gefertigt.

Die Nabe 2 ragt nach Innen in den Innenraum 21 des Getriebedeckels 1 ab.

In Umfangsrichtung mittig zwischen je zwei Aufbauten 9 ist eine radial verlaufende Verstärkungswand 22 ausgebildet.

Die Verstärkungswände 22 steifen den zwischen der Nabe 2 und dem Grundkörper 5 eingeschlossenen Winkel aus.

Insgesamt sind vier Verstärkungswände 22 derart angeordnet, dass jeweils zwei Verstärkungswände 22 benachbart zu einem Aufbau 9 ausgebildet sind und diesen in Umfangsrichtung mittig zwischen sich aufnehmen.

Jeder Aufbau 9 ist gaubenförmig ausgestaltet und weist zwei parallel zueinander ausgerichtete Seitenflächen 23 auf, welche benachbart zu der Stirnfläche 10 und abgewinkelt gegenüber der Stirnfläche 10 ausgebildet sind.

An den gegenüber der Schrägfläche 6 abgewandten oder von der Schrägfläche 6 abstehenden Enden oder Kanten der Seitenflächen 23 und der Stirnfläche 10 ist jeweils eine Dachfläche 24 ausgebildet, welche die Gaubenform des jeweiligen Aufbaus 9 vervollständigt.

In der Nabe 2 sind in radialer Verlängerung der Bohrungen 11 jeweils Öldurchlassöffnungen 25 ausgebildet, durch welche der axiale Zwischenraum zwischen den Lagern 3 für Schmieröl zugänglich und/oder zur Sichtbegutachtung einsehbar ist. Die Öldurchlassöffnungen 25 sind in die in etwa zylindrische oder zylindrische Seitenfläche 32 der Nabe 2 eingebracht.

Auf die außenseitige Stirnfläche 17 der Nabe 2 ist ein Lagerdeckel 26 aufgesetzt. Der Lagerdeckel 26 ist mit Schrauben 27, welche in entsprechende Bohrlöcher 28 in der Nabe 2 eingeschraubt sind, an dem Grundkörper 5 und/oder der Nabe 2 befestigt.

Jeder Aufbau 9 ist als Hohlkörper mit einem Innenraum 29 ausgebildet, welcher über den Innenraum 21 des Grundkörpers 5 zugänglich ist.

Die Aufbauten 9 sind daher zum Innenraum 21 hin offen ausgeführt.

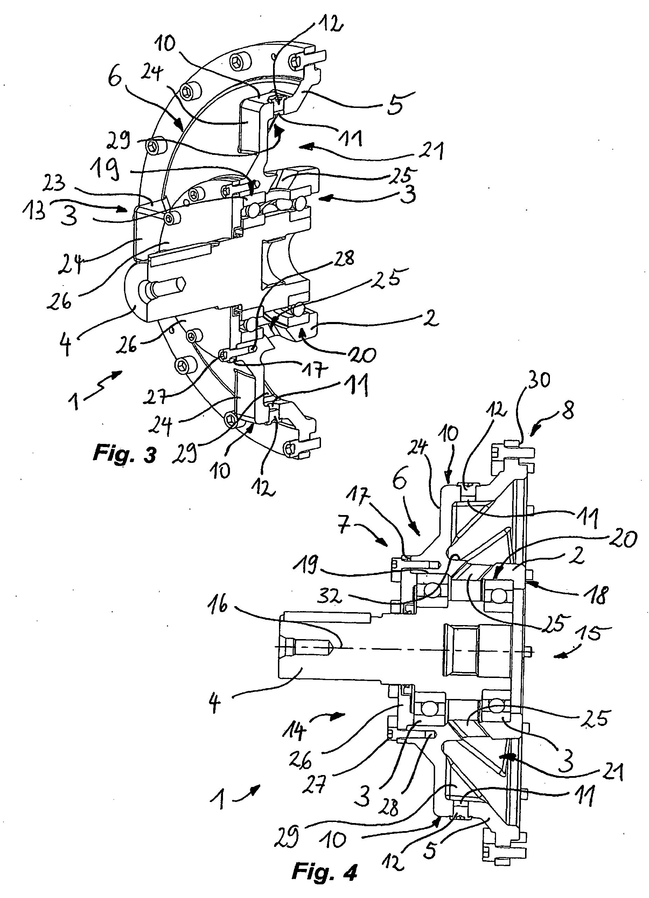

Wie insbesondere aus Fig. 4 ersichtlich ist, weist der Aufbau 9 in einem Radialschnitt eine dreieckige Grundform auf, welche durch Abrundungen und dergleichen ergänzt sein kann.

Am aufgeweiteten Ende 8 des Grundkörpers 5 ist ein Deckelflansch 30 ausgebildet. Der kreisförmige Deckelflansch 30 dient als Auflagefläche für eine Befestigung des Getriebedeckels 1 an einem weiteren, hier nicht dargestellten Gehäuseteil mit den Flanschschrauben 31.

Es sei noch erwähnt, dass die Welle 4 als eintreibende Welle eines Planetengetriebes vorgesehen ist. Auf der Welle 4 kann somit das Sonnenrad eines Planetengetriebes angeordnet sein.

Bei einem Getriebedeckel 1 mit einem kegelstumpfförmigen Grundkörper 5 ist an einer durch die Mantelfläche des Grundkörpers 5 gebildeten Schrägfläche 6 wenigstens ein Aufbau 9 vorgesehen, welcher eine gegenüber der Schrägfläche abgewinkelte Stirnfläche 10 mit einer Bohrung 11 für eine Verschlussschraube 12 oder ein Ölschauglas 13 aufweist.

### Bezugszeichenliste

- 1: Getriebedeckel
- 2: Nabe
- 3: Wellenlager
- 4: Welle
- 5: Grundkörper
- 6: Schrägfläche
- 7: verjüngtes Ende
- 8: aufgeweitetes Ende
- 9: Aufbau
- 10: Stirnfläche
- 11: Bohrung
- 12: Verschlussschraube
- 13: Ölschauglas
- 14: Deckfläche
- 15: Grundfläche
- 16: Achse
- 17: Stirnfläche
- 18: Stirnfläche
- 19: Aufnahme
- 20: Aufnahme
- 21: Innenraum
- 22: Verstärkungswand
- 23: Seitenfläche
- 24: Dachfläche
- 25: Öldurchlassöffnung
- 26: Lagerdeckel
- 27: Schraube
- 28: Bohrloch
- 29: Innenraum
- 30: Deckelflansch
- 31: Flanschschraube

## Patentansprüche

1. Getriebedeckel (1) mit einer Nabe (2) zur Aufnahme eines Wellenlagers (3),
wobei der Getriebedeckel (1) einen kegelstumpfförmigen Grundkörper (5) aufweist,
die Nabe (2) am verjüngten Ende (7) des kegelstumpfförmigen Grundkörpers (5) angeordnet ist,
auf einer Schrägfläche (6) des Grundkörpers (5) wenigstens zwei Aufbauten (9) mit jeweils einer von der Schrägfläche (6) abgewinkelten Stirnfläche (10) ausgebildet sind,
in jeder Stirnfläche (10) eine durchgehende Bohrung (11) eingebracht ist, in welche ein Ölschauglas (13) oder eine Verschlussschraube (12) eingesetzt ist,
**dadurch gekennzeichnet, dass**
die Nabe (2) in einen Innenraum (21) des Grundkörpers (5) abragt,
so dass der Innenraum (21) des Grundkörpers (5) zur Aufnahme der Nabe (2) verwendbar ist,
dass zwischen der in den Innenraum (21) abragenden Nabe (2) und dem Grundkörper (5) vorzugsweise radial verlaufende Verstärkungswände (22) ausgebildet sind,
wobei die Verstärkungswände (22) einen zwischen der in den Innenraum (21) abragenden Nabe (2) und dem Grundkörper (5) eingeschlossenen Winkel aussteifen,
wobei in Umfangsrichtung je ein Aufbau (9) zwischen zwei Verstärkungswänden (22) angeordnet ist.

2. Getriebedeckel (1) mit einer Nabe (2) zur Aufnahme eines Wellenlagers (3),
wobei der Getriebedeckel (1) einen kegelstumpfförmigen Grundkörper (5) aufweist,
die Nabe (2) am verjüngten Ende (7) des kegelstumpfförmigen Grundkörpers (5) angeordnet ist,
auf einer Schrägfläche (6) des Grundkörpers (5) wenigstens zwei Aufbauten (9) mit jeweils einer von der Schrägfläche (6) abgewinkelten Stirnfläche (10) ausgebildet sind,
in jeder Stirnfläche (10) eine durchgehende Bohrung (11) eingebracht ist, in welche ein Ölschauglas (13) oder eine Verschlussschraube (12) eingesetzt ist,
**dadurch gekennzeichnet, dass**
die Nabe (2) in einen Innenraum (21) des Grundkörpers (5) abragt,
so dass der Innenraum (21) des Grundkörpers (5) zur Aufnahme der Nabe (2) verwendbar ist,
dass zwischen der in den Innenraum (21) abragenden Nabe (2) und dem Grundkörper (5) vorzugsweise radial verlaufende Verstärkungswände (22) ausgebildet sind,
wobei die Verstärkungswände (22) einen zwischen der in den Innenraum (21) abragenden Nabe (2) und dem Grundkörper (5) eingeschlossenen Winkel aussteifen,
wobei in Umfangsrichtung je eine Verstärkungswand (22) zwischen jeweils zwei Aufbauten (9) angeordnet ist.

3. Getriebedeckel (1) nach Anspruch 2,
**dadurch gekennzeichnet, dass**
in Umfangsrichtung je ein Aufbau (9) zwischen zwei Verstärkungswänden (22) angeordnet ist.

4. Getriebedeckel (1) nach einem der Ansprüche 1 bis 3,
**dadurch gekennzeichnet, dass**
auf dem Grundkörper (5) inklusive der wenigstens zwei Aufbauten (9) vier Aufbauten an jeweils um 90° in Umfangsrichtung versetzter Position angeordnet sind,
dass jeder Aufbau (9) eine gegen die Schrägfläche (6) abgewinkelte Stirnfläche (10) aufweist, in welcher eine durchgehende Bohrung (11) eingebracht ist,
und dass in jede Bohrung (11) alternativ ein Ölschauglas (13), eine Verschlussschraube (12) und/oder eine Messsonde einbringbar ist/sind.

5. Getriebedeckel (1) nach Anspruch 4,
**dadurch gekennzeichnet, dass**
die Bohrung (11) jedes der Aufbauten (9) auf einer Radiallinie angeordnet ist
und/oder
dass die Stirnfläche (10) jedes der Aufbauten (9) radial ausgerichtet ist.

6. Getriebedeckel (1) nach einem der vorangegangenen Ansprüche,
**dadurch gekennzeichnet,**
**dass** die Nabe (2) in einer Deckfläche (14) an dem Grundkörper (5) angeordnet ist, insbesondere wobei eine außenseitige Stirnfläche (17) der Nabe (2) fluchtend mit der Deckfläche (14) des kegelstumpfförmigen Grundkörpers (5) angeordnet ist.

7. Getriebedeckel (1) nach einem der vorangegangenen Ansprüche,
**dadurch gekennzeichnet, dass**
die wenigstens zwei Aufbauten (9) jeweils in einem Radialschnitt eine dreieckige Grundform haben
und/oder
dass die wenigstens zwei Aufbauten (9) jeweils gaubenförmig ausgebildet sind.

8. Getriebedeckel (1) nach einem der vorangegangenen Ansprüche,
**dadurch gekennzeichnet,**
**dass** am äußeren Umfang des Grundkörpers (5) ein umlaufender Deckelflansch (30) ausgebildet ist.

9. Getriebedeckel (1) nach einem der vorangegangenen Ansprüche,
**dadurch gekennzeichnet, dass**
die Nabe (2) zwei axial beabstandete Aufnahmen (19, 20) für jeweils ein Wellenlager (3) aufweist.

10. Getriebedeckel (1) nach einem der vorangegangenen Ansprüche,
**dadurch gekennzeichnet, dass**
die Nabe (2) und der Grundkörper (5) einstückig ausgebildet und verbunden sind und/oder
dass diametral gegenüber jedem der wenigstens zwei Aufbauten (9) ein weiterer Aufbau (9) auf dem Grundkörper (5) angeordnet ist, insbesondere wobei jeder der weiteren Aufbauten (9) identisch zu jedem der wenigstens zwei Aufbauten (9) ausgebildet ist.

11. Getriebedeckel (1) nach einem der vorangegangenen Ansprüche 1 bis 8 oder 10,
**dadurch gekennzeichnet, dass**
in einer Seitenfläche (32) der Nabe (2) wenigstens zwei Öldurchlassöffnungen (25) ausgebildet sind.
mit welcher Schmieröl zu dem in der Nabe (2) angeordneten Wellenlager (3) leitbar ist,
insbesondere wobei die Bohrung (11) jeder der wenigstens zwei Aufbauten (9) in radialer Verlängerung jeweils einer der wenigstens zwei Öldurchlassöffnungen (25) angeordnet ist,
oder
dass der Getriebedeckel nach Anspruch 9 ausgebildet ist und
in einer Seitenfläche (32) der Nabe (2) wenigstens zwei Oldurchlassöffnungen (25) ausgebildet sind.
mit welcher Schmieröl zu den in der Nabe (2) angeordneten Wellenlagern (3) leitbar ist, insbesondere wobei die Bohrung (11) jeder der wenigstens zwei Aufbauten (9) in radialer Verlängerung jeweils einer der wenigstens zwei Oldurchlassöffnungen (25) angeordnet ist.

12. Getriebedeckel (1) nach einem der vorangegangenen Ansprüche,
**dadurch gekennzeichnet, dass**
der Getriebedeckel (1) um die Achse (16) der Nabe (2) rotationssysmmetrisch ausgebildet ist und/oder
dass die Nabe (2) konzentrisch zu dem Grundkörper (5) an dem Grundkörper (5) angeordnet ist.

13. Getriebedeckel (1) nach Anspruch 6 oder einem der Ansprüche 7-12 wenn abhängig von Anspruch 6,
**dadurch gekennzeichnet, dass**
an der außenseitigen Stirnfläche (17) der Nabe (2) Bohrlöcher (28) für die Befestigung eines die Nabe (2) abdeckenden Lagerdeckels (26) ausgebildet sind
und/oder
dass der Getriebedeckel (1) als einstückiges Gussteil ausgeführt ist.

14. Getriebedeckel (1) nach einem der vorangegangenen Ansprüche,
**dadurch gekennzeichnet, dass**
ein jeweiliger Innenraum (29) jedes der wenigstens zwei Aufbauten (9) von dem Innenraum (21) des Grundkörpers (5) her zugänglich ist
und/oder
dass eine Höhe des Grundkörpers (5) durch eine axiale Länge der Nabe (2) bestimmt ist.

15. Getriebe, insbesondere Planetengetriebe,
**dadurch gekennzeichnet, dass**
eine Welle (4), insbesondere eine eintreibende Welle, durch einen Getriebedeckel (1) nach einem der vorangegangenen Ansprüche geführt und in diesem gelagert ist.

## Claims

1. A transmission cover (1) with a hub (2) for receiving a shaft bearing (3), wherein the transmission cover (1) has a frustoconical base body (5),
the hub (2) is arranged on the tapered end (7) of the frustoconical base body (5),
at least two structures (9) with in each case an end face (10) angled from the inclined face (6) are formed on an inclined face (6) of the base body (5),
a through bore (11) is introduced into each end face (10), into which bore an oil sight glass (13) or a screw plug (12) is inserted,
**characterised in that**
the hub (2) projects into an interior (21) of the base body (5),
so that the interior (21) of the base body (5) can be used to receive the hub (2),
**in that** preferably radially running reinforcing walls (22) are formed between the hub (2) which projects into the interior (21) and the base body (5),
the reinforcing walls (22) reinforcing an angle enclosed between the hub (2) which projects into the interior (21) and the base body (5),
one structure (9) in each case being arranged between two reinforcing walls (22) in the peripheral direction.

2. A transmission cover (1) with a hub (2) for receiving a shaft bearing (3),
wherein the transmission cover (1) has a frustoconical base body (5),
the hub (2) is arranged on the tapered end (7) of the frustoconical base body (5),
at least two structures (9) with in each case an end face (10) angled from the inclined face (6) are formed on an inclined face (6) of the base body (5),
a through bore (11) is introduced into each end face (10), into which bore an oil sight glass (13) or a screw plug (12) is inserted,
**characterised in that**
the hub (2) projects into an interior (21) of the base body (5),
so that the interior (21) of the base body (5) can be used to receive the hub (2),
**in that** preferably radially running reinforcing walls (22) are formed between the hub (2) which projects into the interior (21) and the base body (5),
the reinforcing walls (22) reinforcing an angle enclosed between the hub (2) which projects into the interior (21) and the base body (5),
one reinforcing wall (22) in each case being arranged between two structures (9) in each case in the peripheral direction.

3. A transmission cover (1) according to Claim 2,
**characterised in that**
one structure (9) in each case is arranged between two reinforcing walls (22) in the peripheral direction.

4. A transmission cover (1) according to one of Claims 1 to 3,
**characterised in that**
including the at least two structures (9) four structures are arranged on the base body (5) at positions offset in each case by 90° in the peripheral direction,
**in that** each structure (9) has an end face (10) which is angled against the inclined face (6), into which end face a through bore (11) is introduced,
and **in that** alternatively an oil sight glass (13), a screw plug (12) and/or a measuring probe can be introduced into each bore (11).

5. A transmission cover (1) according to Claim 4,
**characterised in that**
the bore (11) of each of the structures (9) is arranged on a radial line
and/or
**in that** the end face (10) of each of the structures (9) is aligned radially.

6. A transmission cover (1) according to one of the preceding claims, **characterised in that**
the hub (2) is arranged on the base body (5) in a top surface (14),
in particular an outside end face (17) of the hub (2) being arranged flush with the top surface (14) of the frustoconical base body (5).

7. A transmission cover (1) according to one of the preceding claims,
**characterised in that**
the at least two structures (9) in each case have a triangular basic form in a radial section
and/or
**in that** the at least two structures (9) in each case are formed to be dormer-shaped.

8. A transmission cover (1) according to one of the preceding claims,
**characterised in that**
a circumambient cover flange (30) is formed on the outer periphery of the base body (5).

9. A transmission cover (1) according to one of the preceding claims,
**characterised in that**
the hub (2) has two axially spaced-apart receptacles (19, 20) for one shaft bearing (3) in each case.

10. A transmission cover (1) according to one of the preceding claims,
**characterised in that**
the hub (2) and the base body (5) are formed and connected in one piece
and/or
**in that** a further structure (9) is arranged on the base body (5) diametrically with respect to each of the at least two structures (9), in particular with each of the further structures (9) being formed identically to each of the at least two structures (9).

11. A transmission cover (1) according to one of the preceding Claims 1 to 8 or 10,
**characterised in that**
at least two oil passage openings (25) are formed in a side face (32) of the hub (2), with which openings lubricating oil can be carried to the shaft bearing (3) arranged in the hub (2),
in particular the bore (11) of each of the at least two structures (9) being arranged in a radial extension of one in each case of the at least two oil passage openings (25),
or
**in that** the transmission cover is formed according to Claim 9 and
at least two oil passage openings (25) are formed in a side face (32) of the hub (2),
with which openings lubricating oil can be carried to the shaft bearings (3) arranged in the hub (2),
in particular the bore (11) of each of the at least two structures (9) being arranged in a radial extension of one in each case of the at least two oil passage openings (25).

12. A transmission cover (1) according to one of the preceding claims,
**characterised in that**
the transmission cover (1) is formed rotationally symmetrically about the axis (16) of the hub (2)
and/or
**in that** the hub (2) is arranged on the base body (5) concentrically to the base body (5).

13. A transmission cover (1) according to Claim 6 or one of Claims 7 - 12 if depending from Claim 6,
**characterised in that**
drilled holes (28) for fastening a bearing cover (26) which covers the hub (2) are formed on the outside end face (17) of the hub (2)
and/or
**in that** the transmission cover (1) is designed as a one-piece cast part.

14. A transmission cover (1) according to one of the preceding claims,
**characterised in that**
a respective interior (29) of each of the at least two structures (9) is accessible from the interior (21) of the base body (5)
and/or
**in that** a height of the base body (5) is determined by an axial length of the hub (2).

15. A transmission, in particular planetary gear, **characterised in that**
a shaft (4), in particular an input shaft, is guided through a transmission cover (1) according to one of the preceding claims and is mounted therein.

## Revendications

1. Couvercle d'engrenage (1) avec un moyeu (2) pour recevoir un palier d'arbre (3),
sachant que le couvercle d'engrenage (1) présente un corps de base tronconique (5), que le moyeu (2) est disposé à l'extrémité rétrécie (7) du corps de base tronconique (5), qu'au moins deux structures (9) présentant chacune une face frontale (10) formant un angle par rapport à une surface inclinée (6) du corps de base (5) sont formées sur la surface inclinée (6),
qu'un perçage traversant (11) est pratiqué dans chaque face frontale (10), perçage dans lequel est installé un regard (13) de niveau d'huile ou une vis de fermeture (12), **caractérisé en ce que** le moyeu (2) fait saillie dans un espace intérieur (21) du corps de base (5),
de sorte que l'espace intérieur (21) du corps de base (5) peut être utilisé pour recevoir le moyeu (2),
**en ce que** des parois de renforcement (22) s'étendant de préférence radialement sont formées entre le moyeu (2) faisant saillie dans l'espace intérieur (21) et le corps de base (5),
sachant que les parois de renforcement (22) renforcent un angle formé entre le moyeu (2) faisant saillie dans l'espace intérieur (21) et le corps de base (5),
sachant que, en direction périphérique, une structure (9) est chaque fois disposée entre deux parois de renforcement (22).

2. Couvercle d'engrenage (1) avec un moyeu (2) pour recevoir un palier d'arbre (3),
sachant que le couvercle d'engrenage (1) présente un corps de base tronconique (5),
que le moyeu (2) est disposé à l'extrémité rétrécie (7) du corps de base tronconique (5), qu'au moins deux structures (9) présentant chacune une face frontale (10) formant un angle par rapport à une surface inclinée (6) du corps de base (5) sont formées sur la surface inclinée (6),
qu'un perçage traversant (11) est pratiqué dans chaque face frontale (10), perçage dans lequel est installé un regard (13) de niveau d'huile ou une vis de fermeture (12), **caractérisé en ce que** le moyeu (2) fait saillie dans un espace intérieur (21) du corps de base (5),
de sorte que l'espace intérieur (21) du corps de base (5) peut être utilisé pour recevoir le moyeu (2),
**en ce que** des parois de renforcement (22) s'étendant de préférence radialement sont formées entre le moyeu (2) faisant saillie dans l'espace intérieur (21) et le corps de base (5),
sachant que les parois de renforcement (22) renforcent un angle formé entre le moyeu (2) faisant saillie dans l'espace intérieur (21) et le corps de base (5),
sachant que, en direction périphérique, une paroi de renforcement (22) est chaque fois disposée entre deux structures (9).

3. Couvercle d'engrenage (1) selon la revendication 2, **caractérisé en ce que**, en direction périphérique, une structure (9) est chaque fois disposée entre deux parois de renforcement (22).

4. Couvercle d'engrenage (1) selon l'une des revendications 1 à 3, **caractérisé en ce que** quatre structures, incluant les au moins deux structures (9), sont disposées sur le corps de base (5) à des positions respectivement décalées de 90° en direction circonférentielle,
**en ce que** chaque structure (9) présente une face frontale (10) formant un angle par rapport à la surface inclinée (6) et dans laquelle est pratiqué un perçage traversant (11), et **en ce que**, alternativement, un regard (13) de niveau d'huile, une vis de fermeture (12) et/ou une sonde de mesure peut/peuvent être mis en place dans chaque perçage (11).

5. Couvercle d'engrenage (1) selon la revendication 4, **caractérisé en ce que** le perçage (11) de chacune des structures (9) est disposé sur une ligne radiale,
et/ou **en ce que** la face frontale (10) de chacune des structures (9) est orientée radialement.

6. Couvercle d'engrenage (1) selon l'une des revendications précédentes, **caractérisé en ce que** le moyeu (2) est disposé dans une face de recouvrement (14) sur le corps de base (5),
sachant notamment qu'une face frontale extérieure (17) du moyeu (2) est disposé en alignement avec la face de recouvrement (14) du corps de base tronconique (5).

7. Couvercle d'engrenage (1) selon l'une des revendications précédentes, **caractérisé en ce que** les au moins deux structures (9) possèdent chacune, dans une coupe radiale, une forme de base triangulaire,
et/ou **en ce que** les au moins deux structures (9) sont chacune réalisées en forme de lucarne.

8. Couvercle d'engrenage (1) selon l'une des revendications précédentes, **caractérisé en ce qu'**un rebord de couvercle entourant (30) est formé sur la périphérie extérieure du corps de base. (5).

9. Couvercle d'engrenage (1) selon l'une des revendications précédentes, **caractérisé en ce que** le moyeu (2) présente deux logements (19, 20) axialement distants, chacun pour un palier d'arbre (3).

10. Couvercle d'engrenage (1) selon l'une des revendications précédentes, **caractérisé en ce que** le moyeu (2) et le corps de base (5) sont réalisés et reliés d'un seul tenant,
et/ou **en ce qu'**une structure supplémentaire (9) est disposée sur le corps de base (5) diamétralement en vis-à-vis de chacune des au moins deux structures (9), sachant notamment que chacune des structures supplémentaires (9) est réalisée identique à chacune des au moins deux structures (9).

11. Couvercle d'engrenage (1) selon l'une des revendications précédentes 1 à 8 ou 10, **caractérisé en ce qu'**au moins deux orifices (25) de passage d'huile sont formés dans une face latérale (32) du moyeu (2),
par lesquels de l'huile de lubrification peut être dirigée vers le palier d'arbre (3) disposé dans le moyeu (2),
sachant notamment que le perçage (11) de chacune des au moins deux structures (9) est respectivement disposé dans le prolongement radial d'un des au moins deux orifices (25) de passage d'huile,
ou **en ce que** l'engrenage est configuré selon la revendication 9
et au moins deux orifices (25) de passage d'huile sont formés dans une face latérale (32) du moyeu (2),
par lesquels de l'huile de lubrification peut être dirigée vers les paliers d'arbre (3) disposés dans le moyeu (2),
sachant notamment que le perçage (11) de chacune des au moins deux structures (9) est respectivement disposé dans le prolongement radial d'un des au moins deux orifices (25) de passage d'huile.

12. Couvercle d'engrenage (1) selon l'une des revendications précédentes, **caractérisé en ce que** le couvercle d'engrenage (1) est réalisé à symétrie de révolution autour de l'axe (16) du moyeu (2),
et/ou **en ce que** le moyeu (2) est disposé concentriquement au corps de base (5) sur le corps de base (5).

13. Couvercle d'engrenage (1) selon la revendication 6 ou selon l'une des revendications 7 à 12 si elles sont rattachées à la revendication 6, **caractérisé en ce que** des trous forés (28), pour la fixation d'un chapeau de palier (26) recouvrant le moyeu (2), sont formés sur la face frontale extérieure (17) du moyeu (2),
et/ou **en ce que** le couvercle d'engrenage (1) est réalisé sous la forme d'une pièce moulée en fonte d'un seul tenant.

14. Couvercle d'engrenage (1) selon l'une des revendications précédentes, **caractérisé en ce qu'**un espace intérieur respectif (29) de chacune des au moins deux structures (9) est accessible depuis l'espace intérieur (21) du corps de base (5),
et/ou **en ce qu'**une hauteur du corps de base (5) est définie par une longueur axiale du moyeu (2).

15. Engrenage, en particulier engrenage planétaire, **caractérisé en ce qu'**un arbre (4), en particulier un arbre d'entrée, est dirigé à travers un couvercle d'engrenage (1) selon l'une des revendications précédentes et est monté dans celui-ci.
